(19) **Europäisches Patentamt**

**European Patent Office**

**Office européen des brevets**

(11) Veröffentlichungsnummer: **0 425 473 A1**

(12) **EUROPÄISCHE PATENTANMELDUNG**

(21) Anmeldenummer: **91100223.6**

(22) Anmeldetag: **21.11.87**

(51) Int. Cl.⁵: **F16F 1/38**

Diese Anmeldung is am 09 - 01 - 1991 als Teilanmeldung zu der unter INID-Kode 60 erwähnten Anmeldung eingereicht worden.

(30) Priorität: **23.07.87 DE 3724431**

(43) Veröffentlichungstag der Anmeldung:
**02.05.91 Patentblatt 91/18**

(84) Benannte Vertragsstaaten:
**DE FR GB IT**

(61) Veröffentlichungsnummer der früheren Anmeldung nach Art. 76 EPü: **0300093**

(71) Anmelder: **Firma Carl Freudenberg Höhnerweg 2-4 W-6940 Weinheim/Bergstrasse (DE)**

(72) Erfinder: **Hamaekers, Arno, Dipl.-Ing. Siedlungsstrasse 60 W-6946 Gorxheimertal (DE)**
Erfinder: **Rudolph, Axel, Dipl.-Ing. Finkenweg 23 W-6140 Bensheim 3 (DE)**

(54) **Hülsengummifeder.**

(57) Eine Hülsengummifeder, umfassend zwei einander in achsparalleler Zuordnung umschließende Stützhülsen (1, 2), die durch einen Federkörper aus gummielastischem Werkstoff aufeinander abgestützt sind, wobei der Federkörper zwei schräg zur Längsachse verlaufende Wandteile (4, 5) umfaßt, die durch wenigstens zwei sich parallel zueinander erstreckende Stirnflächen (6) begrenzt und auf einander gegenüberliegenden Seiten der inneren (1) der Stützhülsen angeordnet sind. Die Stirnflächen (6) beider Wandteile (4, 5) sind zur Längsachse entgegengesetzt geneigt und hohlkegelig gestaltet.

Fig. 1

# HÜLSENGUMMIFEDER

Die Erfindung betrifft eine Hülsengummifeder nach dem Oberbegriff von Anspruch 1.

Eine solche Hülsengummifeder ist aus der DE-OS 27 48 193 bekannt. Sie gelangt insbesondere im Bereich der Achsaufhängung eines Kraftfahrzeuges zur Anwendung und soll eine Kompensation der bei schneller Kurvenfahrt auftretenden Übersteuerungsneigung bewirken. Zur Erreichung dieses Zweckes sind die den Federkörper bildenden Wandteile gleichsinnig geneigt und in axialer Richtung beiderseits durch ebene Stirnflächen begrenzt, die sich parallel zueinander erstrecken. Die mit der Hülsengummifeder erzielten Ergebnisse sind indessen noch nicht völlig zufriedenstellend.

Der Erfindung liegt die Aufgabe zugrunde, eine solche Hülsengummifeder derart weiterzuentwickeln, daß sich bei der Kurvenfahrt eine deutlich verbesserte Radführung ergibt und eine weitgehende Beseitigung der Übersteuerungsneigung. Gedacht ist hierbei insbesondere an eine Verwendung der Hülsengummifeder bei Verbund- oder Koppellenkerachsen oder auch bei Längslenker mit zwei aufbauseitigen Lagerstellen.

Diese Aufgabe wird erfindungsgemäß mit den kennzeichnenden Merkmalen von Anspruch 1 und 5 gelöst. Auf vorteilhafte Ausgestaltungen nehmen die Unteransprüche 2 bis 4 Bezug.

Bei der erfindungsgemäßen Hülsengummifeder sind die Stirnflächen beider Wandteile zur Längsachse entgegengesetzt geneigt und hohlkegelig gestaltet.

Das an der inneren Stützhülse befestigte Anschlußteil erfährt hierdurch bei Einleitung axialgerichteter Kräfte auch außerhalb der konstruktionsgewollten Ausweichrichtung eine gute Führung, was maßgeblich dazu beiträgt, indifferente Ausweichbewegungen der inneren Stützhülse zu unterdrücken. Sowohl hinsichtlich der Richtung als auch hinsichtlich der Größe der gewollten Ausweichbewegungen lassen sich diese bei Einleitung längsgerichteter Kräfte sehr exakt vorherbestimmen und auch unter ungünstigen Anwendungsbedingungen gewährleisten.

Die Wandteile umschließen die innere Stützhülse maximal auf ihrem halben Umfang und gewährleisten eine ganz besonders gute Führung.

Im Hinblick auf eine Modifizierung der Nachgiebigkeit der beiden Wandteile ist es möglich, voneinander abweichende Werkstoffe zu ihrer Herstellung zu verwenden. Die Wandteile können jedoch auch aus übereinstimmenden Werkstoffen bestehen, wenn die Wandteile der Achse der inneren Stützhülse unter voneinander abweichenden Winkeln zugeordnet sind.

Eine weitere Möglichkeit, die Nachgiebigkeit der Wandteile in bezug aufeinander zu modifizieren, besteht darin, sie axial gegeneinander verschoben anzubringen. Auch können die Wandteile eine voneinander abweichende Länge in axialer Richtung haben.

Anspruch 5 nimmt Bezug auf eine Ausführung, bei der die Wandteile von ähnlicher Gestalt sind wie die Gänge eines zweigängigen Gewindes. Entsprechende Ausführungen eignen sich auch im Hinblick auf die Verminderung von Seitenneigungen, die sich bei der schnellen Kurvenfahrt eines Kraftfahrzeuges ergeben können.

Ausführungsbeispiele der Erfindung werden nachfolgend anhand der Zeichnungen verdeutlicht. Es zeigen :

Figur 1 eine Hülsengummifeder, bei der die beiden Wandteile entgegengesetzt geneigt sind und eine voneinander verschiedene Länge haben ;

Figur 2 eine Ausführung ähnlich Figur 1, bei der die beiden Wandteile axial gegeneinander verschoben angebracht sind ;

Figur 3 eine Ausführung, bei der die beiden Wandteile von ähnlicher Gestalt sind wie die Gänge eines zweigängigen Gewindes.

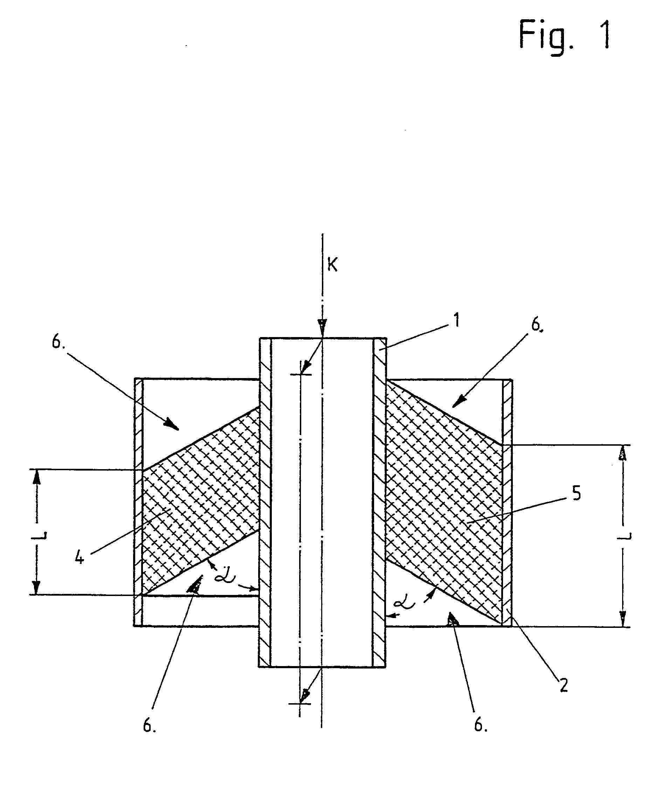

Die in Figur 1 gezeigte Hülsengummifeder umfaßt zwei einander in achsparalleler Zuordnung umschließende Stützhülsen 1, 2, die durch einen Federkörper aus gummielastischem Werkstoff einander abgestützt sind, wobei der Federkörper zwei schräg zur Längsachse verlaufende Wandteile 4, 5 umfaßt, die aufeinander gegenüberliegenden Seiten der inneren Stützhülse 1 angeordnet sind. Die Wandteile 4, 5 sind innen- und außenseitig durch Vulkanisierung an den Stützhülsen 1, 2 festgelegt und bilden mit diesen zusammen eine unlösbar in sich geschlossene Baueinheit (die Stirnflächen beider Wandteile sind hohlkegelig gestaltet und entgegengesetzt zugeneigt).

Die Stützhülsen 1, 2 sind im Normalzustand einander koaxial zugeordnet und durch die beiden Wandteile 4, 5 verbunden. Die beiden Wandteile 4, 5 sind einander gegenüberliegend in dem Zwischenraum zwischen den beiden Stützhülsen 1, 2 angeordnet und jeweils von hohlkegeliger Gestalt. Die sie in axialer Richtung begrenzenden Stirnflächen 6 sind dementsprechend hohlkegelig gewölbt. Bei Einleitung einer axial gerichteten Kraft in die innere Stützhülse 1 ergibt sich dadurch eine Relativverlagerung dieser Stützhülse 1, die durch Pfeile und eine strichpunktierte Linie angedeutet ist.

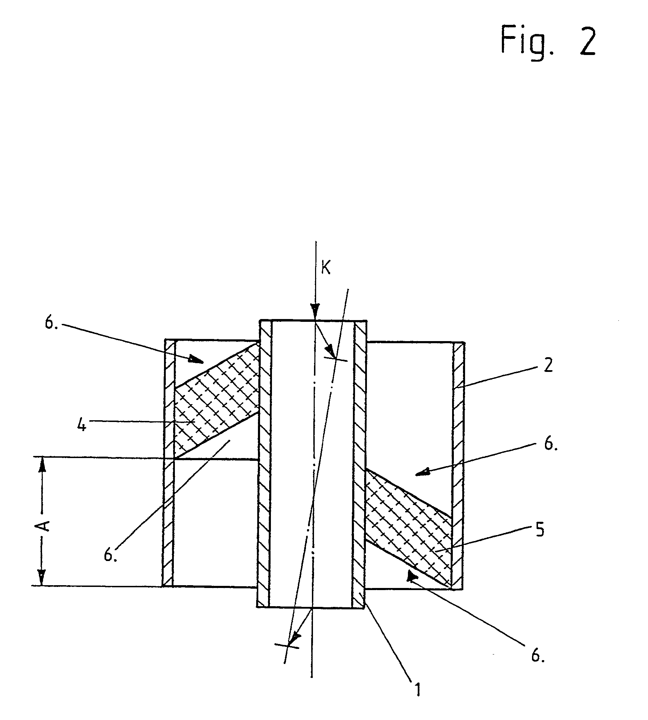

Die in Figur 2 gezeigte Ausführung ist ähnlich wie die vorstehend beschriebene gestaltet und auch bei dieser Ausführung wird der Federkörper durch zwei in axialer Richtung durch hohlkegelige Stirnflächen begrenzte Wandteile gebildet, welche eine entgegengesetzte Neigungsrichtung haben und in den Zwischenraum der inneren und der äußeren Stützhülsen 1, 2 einvulkanisiert sind. Die Wandteile 4, 5 sind indessen in axialer Richtung gegeneinander verschoben, was zu einer relativen Verkantung der inneren Stützhülse 1 in bezug auf die äußere Stützhülse 2 bei Einleitung einer axialgerichteten Kraft K in die innere Stützhülse 1 führt.

Auch in diesem Falle ergibt sich somit eine von der Belastungsrichtung gewollt abweichende Richtung der Ausweichbewegung des Federkörpers 1, welche sowohl hinsichtlich ihrer Größe als auch hinsichtlich ihrer Richtung präzise vorherbestimmbar ist.

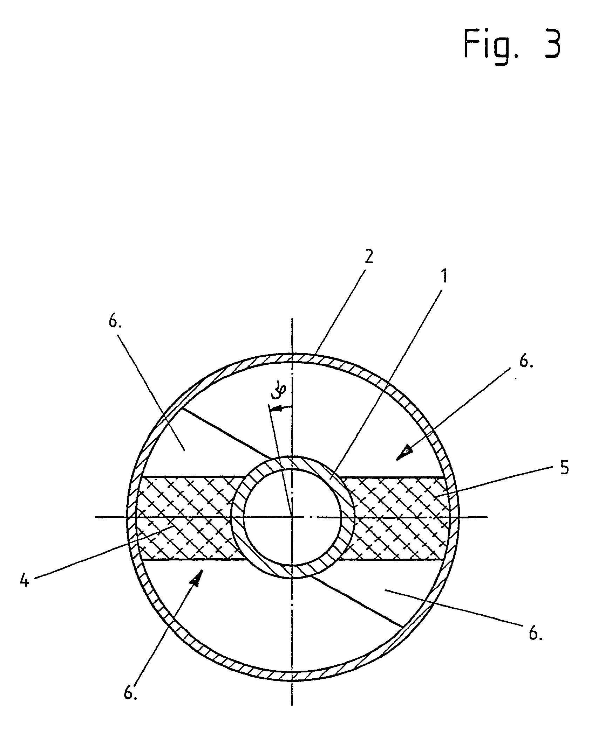

Die Ausführung nach Figur 3 unterscheidet sich von den vorstehend beschriebenen dadurch, daß der zweigeteilte Federkörper von ähnlicher Gestalt ist wie die Gänge eines zweigängigen Gewindes. Die Wandteile 4,5 sind dementsprechend von gewendelter Gestalt und verbinden die innere Stützhülse 1 mit der äußeren Stützhülse 2. Die die Wandteile in Umfangsrichtung begrenzenden Stirnflächen 6 erstrecken sich parallel zueinander und sind in sich gewölbt. Bei Einleitung einer axialgerichteten Kraft, beispielsweise senkrecht zur Zeichenebene, in die innere Stützhülse 1, ergibt sich dadurch eine Relativverdrehung derselben, welche durch den eingezeichneten Pfeil angedeutet ist. Die resultierende Ausweichbewegung hat somit auch in diesem Falle eine von der Richtung der eingeleiteten Kraft abweichende Richtung. Auch diese Ausführung der erfindungsgemäßen Hülsengummifeder läßt sich dadurch ausgezeichnet zur Aktivierung belastungsbedingter Lenkbewegungen benutzen.

**Ansprüche**

1. Hülsengummifeder, umfassend zwei einander in achsparalleler Zuordnung umschließende Stützhülsen, die durch einen Federkörper aus gummielastischem Werkstoff aufeinander abgestützt sind, wobei der Federkörper zwei schräg zur Längsachse verlaufende Wandteile (4, 5) umfaßt, die durch wenigstens zwei sich parallel zueinander erstreckende Stirnflächen (6) begrenzt und auf einander gegenüberliegenden Seiten der inneren (1) der Stützhülsen angeordnet sind, dadurch gekennzeichnet, daß die Stirnflächen (6) beider Wandteile (4, 5) zur Längsachse entgegengesetzt geneigt und hohlkegelig gestaltet sind.

2. Hülsengummifeder nach Anspruch 1, dadurch gekennzeichnet, daß die Wandteile (4, 5) eine voneinander abweichende Nachgiebigkeit haben.

3. Hülsengummifeder nach Anspruch 1 bis 2, dadurch gekennzeichnet, daß die Wandteile (4, 5) um ein Maß A axial gegeneinander verschoben angebracht sind.

4. Hülsengummifeder nach Anspruch 2 bis 3, dadurch gekennzeichnet, daß die Wandteile (4, 5) eine voneinander abweichende Länge (L) in axialer Richtung haben.

5. Hülsengummifeder, umfassend zwei einander in achsparalleler Zuordnung umschließende Stützhülsen, die durch einen Federkörper aus gummielastischem Werkstoff aufeinander abgestützt sind, wobei der Federkörper zwei schräg zur Längsachse verlaufende Wandteile umfaßt, die durch wenigstens zwei sich parallel zueinander erstreckende Stirnflächen begrenzt und auf einander gegenüberliegenden Seiten der inneren der Stützhülsen angeordnet sind, dadurch gekennzeichnet, daß die Wandteile (4, 5) von ähnlicher Gestalt sind wie die Gänge eines zweigängigen Gewindes.

Fig. 1

Fig. 2

Fig. 3

**Europäisches Patentamt**

# EUROPÄISCHER RECHERCHENBERICHT

Nummer der Anmeldung

EP    91 10 0223

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-2748193 (VOLKSWAGENWERK AG)<br>* das ganze Dokument * | 1, 5 | F16F1/38 |
| A | EP-A-147662 (LEMFÖRDER METALLWAREN AG)<br>* das ganze Dokument * | 1, 5 | |
| A | US-A-2719017 (W.MORDARSKI)<br>* das ganze Dokument * | 1, 5 | |
| A | FR-A-2434965 (VOLKSWAGENWERK AG)<br>* das ganze Dokument * | 1, 5 | |

**RECHERCHIERTE SACHGEBIETE (Int. Cl.4)**

F16F

Der vorliegende Recherchenbericht wurde für alle Patentansprüche erstellt

| Recherchenort | Abschlußdatum der Recherche | Prüfer |
|---|---|---|
| DEN HAAG | 19 FEBRUAR 1991 | CZAJKOWSKI A.R. |